# EUROPEAN PATENT SPECIFICATION

(11) **EP 0 477 430 B1**
(45) Date of publication and mention of the grant of the patent: **28.08.1996**
(21) Application number: 90118747.6
(22) Date of filing: 28.09.1990
(51) Int. Cl.: G05B 19/418, G05B 19/41, G05B 19/42

(54) **Off-line teaching method for industrial robot**
Off-line-Lernverfahren für industriellen Roboter
Méthode d'apprentissage hors-ligne pour robot industriel

(43) Date of publication of application: 01.04.1992
(73) Proprietor: KABUSHIKI KAISHA KOBE SEIKO SHO also known as Kobe Steel Ltd., Kobe 651 (JP)
(72) Inventor: Sekino, Teruyoshi, Fujisawa-shi, Kanagawa-ken (JP); Murakami, Tsudoi, Kobe-shi, Hyogo-ken (JP)
(74) Representative: Tiedtke, Harro, Dipl.-Ing.

(56) References cited:
- EP-A- 0 067 446
- EP-A- 0 346 839
- EP-A- 0 377 939
- US-A- 4 761 745

## Description

### BACKGROUND OF THE INVENTION

### 1. Field of the Invention

This invention relates to an off-line teaching method for an industrial robot according to the preamble portion of claim 1, wherein, when working is to be performed by an industrial robot such as a welding robot, a teaching operation for the robot is not performed, but execution data which have been produced in advance by means of a separate teaching system are transported to the industrial robot to effect teaching of the robot.

### 2. Description of the Prior Art

Conventionally, a teaching operation of a working program for an industrial robot such as a welding robot is performed by stopping a robot on a production line and moving the robot in accordance with an actual execution operation.

With such teaching means, since a position of a working point of the robot is stored as coordinates on a robot coordinate system, wherein a reference position fixed with respect to the robot is set as the origin, when it is intended to perform a same working program for a same work piece (object for the working) but on a different robot, if the relationship between installation positions of the work piece and the robot is different, then a teaching operation must be performed for the individual robot. Consequently, much labor is required for a teaching operation. Further, if working steps are increased or the number of kinds of objects for the working is increased, then data may not be stored in a program memory of the robot because the amount of data is too great. Consequently, such an operation is necessitated to replace the program (execution data) from an external storage device by manual operation. Accordingly, it is difficult to construct an automated line such as an FMS (Flexible Manufacturing System) which automatically performs a series of working steps.

Thus, in recent years, teaching means including an off-line teaching system which makes use of a computer has been and is being employed progressively in order to improve the operation rate and facilitate a teaching operation of a robot.

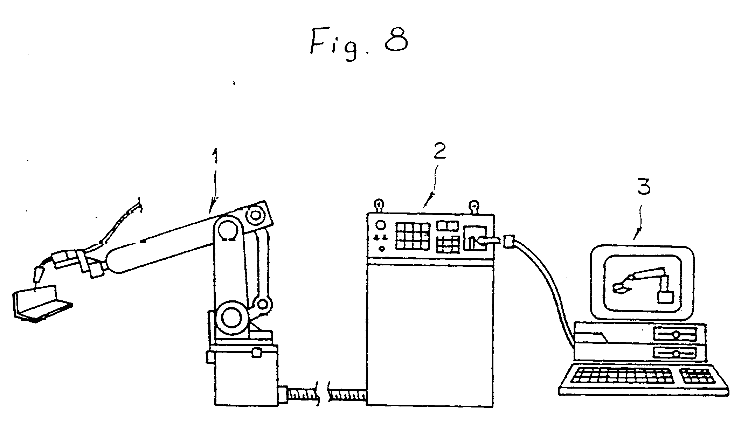

For example, as shown in Fig. 8 representing the state of the art according to the preamble portion of claim 1, a personal computer 3 which serves as a separate teaching system is connected to a control panel 2 for controlling a welding robot 1 so that the control panel 2 may control the welding robot 1 in accordance with execution data (a program) which have been produced in advance using the personal computer 3.

In such an off-line teaching system, using the personal computer 3, block data and so forth are produced in which (1) a teaching program or programs indicative of working contents of the robot 1, (2) working conditions which may be used at various working steps in the teaching program or programs (welding conditions of a data bank and so forth) and, (3) an effective order of a plurality of teaching programs, are gathered for individual work pieces. Then, when the robot 1 is to perform its working, the execution data (1) to (3) are transmitted from the personal computer 3 to the control panel 2.

However, with the conventional off-line teaching method for an industrial robot described above, since the transmission of such execution data (1) to (3) from the personal computer 3 to the control panel 2 is executed one by one in accordance with a designation of the individual data by an operator, where there are a large number of data to be transmitted, the operation for such transmission is very complicated and a designation error of a data name may take place likely. In addition, in an automated line such as a FMS which is to cope with various work pieces, the amount of execution data is very great. Accordingly, it is difficult to construct an automated line where the conventional technique is employed.

Further, in recent years, an automated line such as a FMS has been and is being developed which includes a plurality of robots so as to cope with various work pieces. One of the off-line teaching methods for executing teaching of such a system which includes a plurality of robots using a separate teaching system is conventionally disclosed in Japanese Patent Laid-Open No. 62-108314. According to the conventional method, a series of execution data for each of the robots with regard to various work pieces are described and produced on a work coordinate system with reference to the work piece using the separate teaching system. Then, in order to convert such execution data into coordinate data of a robot coordinate system with reference to each robot or into coordinate data of a reference coordinate system with reference to a working space in which the robots are installed, coordinate transformation matrices are calculated and stored in a memory.

With the conventional off-line teaching method for a system which includes a plurality of robots, coordinate transformation matrices between three kinds of coordinate systems must be calculated and stored. Such operation is very complicated, and much labor and time is required for a teaching operation.

Further, the document EP-A-0 067 446 discloses a robot control data processing apparatus comprising a robot control data dividing processor for dividing robot control data adapted for monitoring and controlling robots into a plurality of divisional operation elements and storing the robot control data in unit of the operation element, and a robot control data editing processor for selectively combining and editing one or more of the plurality of the divisional operation elements. The robot control data consists of operation sequence data which instruct the sequence of operations of the robot, and position data which instruct positions at which the operations are performed, wherein the operation sequence data are input from a source program whilst the position data are input by on-line teaching.

Furthermore, the document EP-A-0 346 839 discloses a system for teaching, controlling and monitoring industrial robots which includes a storage section comprising a first storage means for storing data describing working positions and a second storage means for storing data describing motion patterns of the robots, as well as a teaching section for automatically preparing teach data of each robot by selecting one of the different working positions and one of the motion patterns for the robot in accordance with the type of work.

### SUMMARY OF THE INVENTION

Accordingly, the object of the present invention is to further develop the known off-line teaching methods to the effect that the transmission of execution data to the industrial robot is facilitated to prevent the occurrence of transmission errors.

This object is solved by the features indicated in the characterizing portion of claim 1. An advantageously developed embodiment of the invention is subject-matter of claim 2.

According to the invention, the off-line teaching method is characterized by the steps of
editing the taught and stored execution data for each of the work pieces so that the individual, edited execution data comprises
   block data each including names of several processing programs which are registered in accordance with an order in which they are to be executed,
   processing programs each including several steps having a name of processing condition data to be executed at the respective step, and
   processing condition data each including various set processing conditions,
storing the thus edited execution data,
setting the name of the industrial robot to which the edited execution data are to be transmitted, the name of the respective work piece and the name of the respective block data, and
transmitting the edited execution data for each of the work pieces together with an identification code of the work piece to the industrial robot, wherein,
   firstly, the designated block data are transmitted,
   secondly, all of the processing programs registered in the designated block data are transmitted, and,
   thirdly, all of the processing condition data registered in the transmitted processing programs are transmitted.

As a result, the transmission of the execution data is remarkably facilitated by the claimed hierarchical structure of the execution data, whilst the occurrence of a transmission error is reliably prevented due to the fact that the execution data is transmitted in accordance with the above hierarchical structure.

Preferably, a reference coordinate system is set in a working space in which the industrial robot is installed while a position of a working point of the industrial robot is described in the execution data in accordance with the reference coordinate system, and a coordinate transformation matrix for coordinate transformation from the reference coordinate system to a robot coordinate system with reference to the individual industrial robot is taught in advance, and then, when the execution data are to be transmitted to the industrial robot, the position of the working point of the industrial robot described in the execution data in accordance with the reference coordinate system is converted into a position of a working point of the robot coordinate system using the coordinate transformation matrix. With the off-line teaching method. only two kinds of coordinate systems are required including the reference coordinate system and the robot coordinate system for the individual industrial robot. Besides, even if the positional arrangement between one of the industrial robots and a work piece is varied, this can be coped with by re-setting the corresponding coordinate transformation matrix.

The above and other features and advantages of the present invention will become apparent from the following description and the appended claims, taken in conjunction with the accompanying drawings.

### BRIEF DESCRIPTION OF THE DRAWINGS

Fig. 1 is a block diagram illustrating the structure of execution data stored in a memory in accordance with an off-line teaching method for an industrial robot according to an embodiment of the present invention;
Fig. 2 is a flow diagram illustrating the structure of execution data upon transmission of the data:
Fig. 3 is a flow chart illustrating a transmitting operation of execution data:
Fig. 4 is a flow chart illustrating a coordinate transformation procedure according to the off-line teaching method:
Fig. 5 is a diagrammatic perspective view showing a reference coordinate system and a robot coordinate system according the off-line teaching method:
Fig. 6 is a flow diagram showing a system to which the off-line teaching method is applied:
Fig. 7 is a flow diagram showing a welding FMS to which the off-line teaching method is applied: and
Fig. 8 is an illustration showing a conventional off-line teaching system.

### DESCRIPTION OF THE PREFERRED EMBODIMENTS

An off-line teaching method for an industrial robot according to the present invention is applied to a welding robot as an example of an industrial robot in an embodiment of the invention described below.

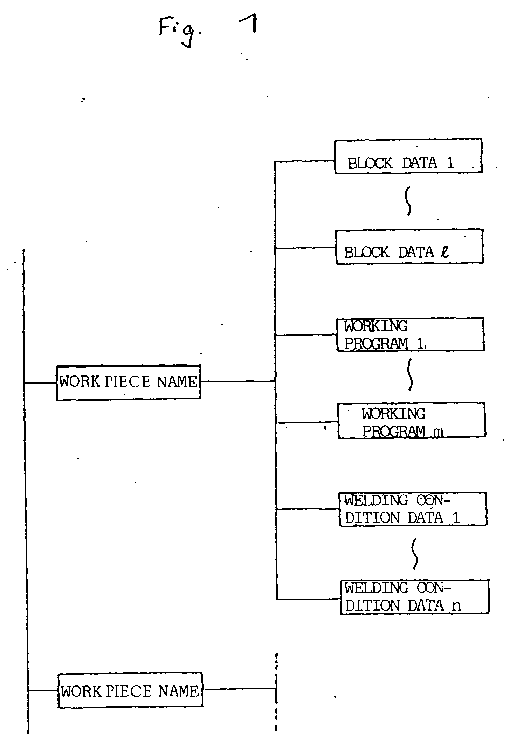

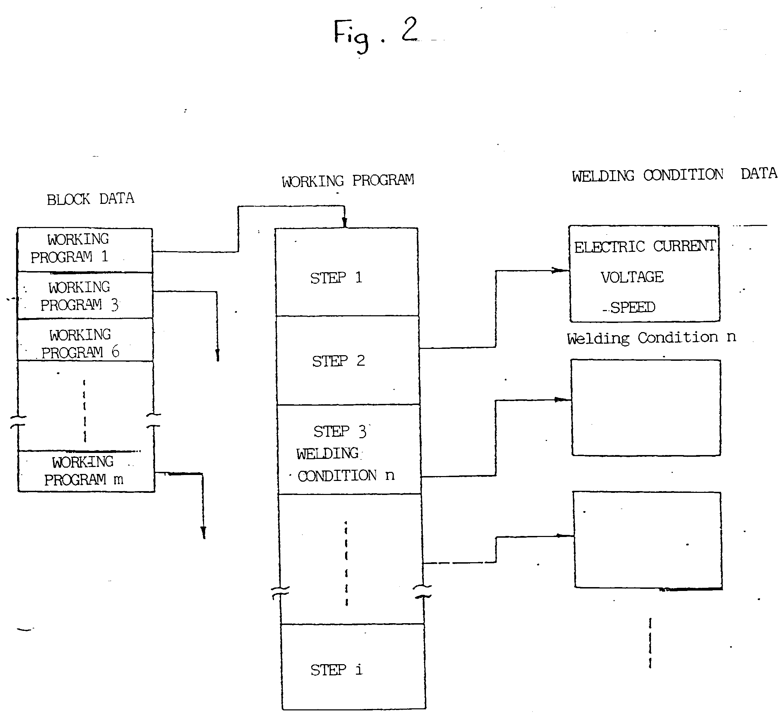

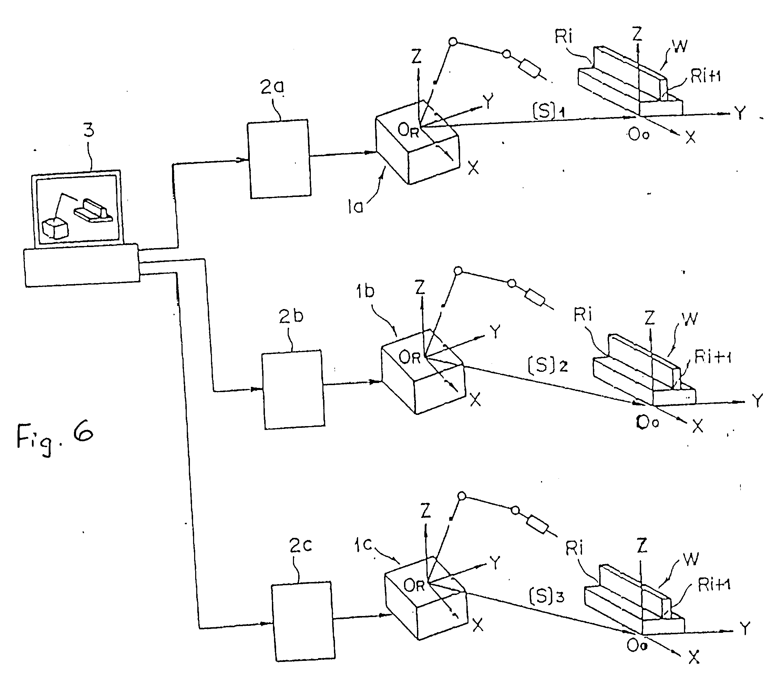

Referring first to Fig. 1. execution data for various kinds of work pieces are entered by way of a personal computer 3 (refer to Figs. 6 to 8) serving as a separate teaching system and are stored into a storage device such that they are gathered for individual kinds of work pieces with individual work names applied thereto. The execution data for each of kinds of work pieces include working programs (operation information for a robot) 1 to m and welding condition data (working conditions under each piece of the operation information) 1 to n. Here, referring to Fig. 2, each of the working programs 1 to m includes several steps 1 to i each having a name of welding condition data to be executed at the step while each of the welding condition data 1 to n includes various set welding conditions such as a welding current. a welding voltage and a welding speed.

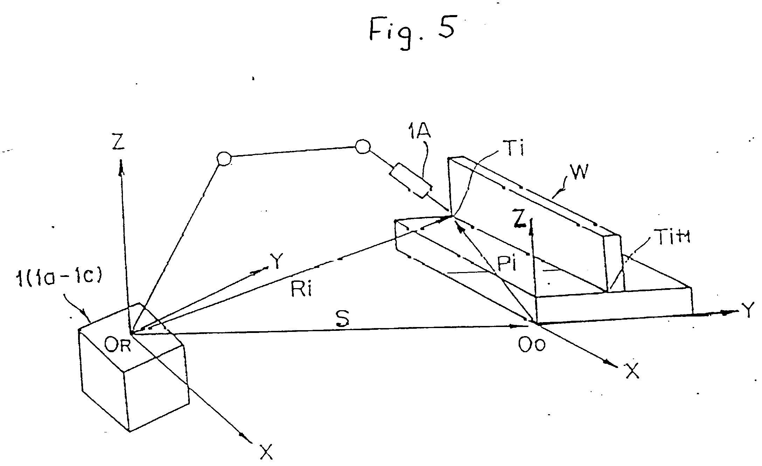

Further, the individual execution data are stored in an edited condition as block data 1 to ℓ for each work piece as seen in Figs. 1 and 2. Each of the block data 1 to ℓ includes names of several working programs which are to be executed by a robot 1 or robots 1a, 1b and 1c (refer to Figs. 5 to 8) and are registered in an edited condition in accordance with an order in which they are to be executed.

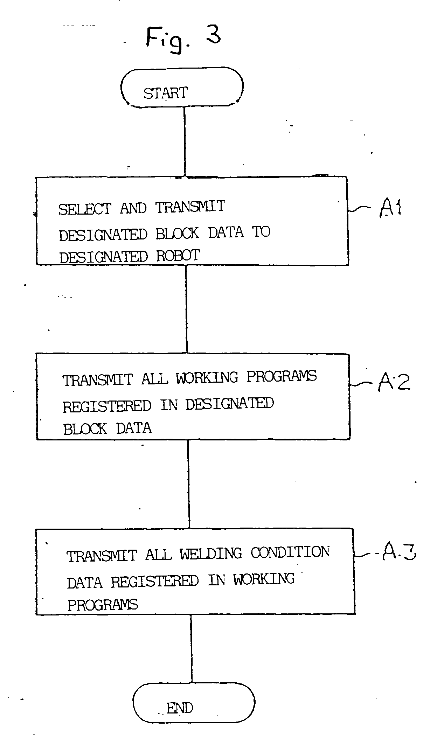

Accordingly, when execution data for individual work pieces are to be transmitted to the robot 1 or robots 1a to 1c, or more particularly to control panels 2, 2a, 2b and 2c of the robot 1 or robots 1a to 1c, a name of a robot to which data are to be transmitted, a name of a work piece and a name of block data are set. In response to such setting, the personal computer 3 serving as an off-line teaching system performs transmission of execution data in accordance with a flow of operations shown in Fig. 3. In particular, designated block data are first selected and transmitted to a designated robot 1 or 1a, 1b or 1c (step A1).
Then, all of the working programs registered in the designated block data are transmitted (step A2), and finally, all of the welding condition data registered in the transmitted working programs are transmitted (step A3).

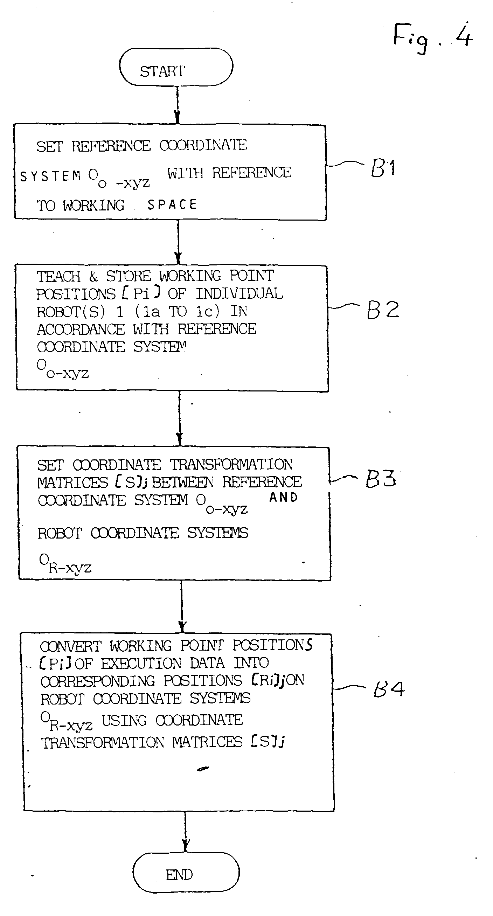

Meanwhile, in the off-line teaching method of the embodiment, a reference coordinate system Oₒ-xyz (refer to Figs. 5 and 6), wherein a reference position Oₒ in a working space in which each of a plurality of welding robots 1a to 1c (three in the embodiment shown) is installed, is set as the origin as shown in Fig. 6, using the personal computer 3 serving as a separate teaching system (refer to step B1 of Fig. 4).

Then, a position T_{I} of a working point of a welding torch 1A of the robot 1 or each of the robots 1a to 1c with respect to a work piece W is described as a position coordinate [P_{I}] (i is a number of a teaching point) on the reference coordinate system 0ₒ-xyz and is taught as execution data to be stored by the personal computer 3 (refer to step B2 of Fig. 4).

A coordinate transformation matrix [S]_{J} (j is a number of a robot, and j = 1 to 3 in the present embodiment) for the coordinate transformation from the reference coordinate system Oₒ-xyz to a robot coordinate system O_{R}-xyz, wherein a reference position O_{R} of the robot 1 or each of the robots 1a to 1c is set as the origin (refer to Figs. 5 and 6), is actually measured for the robot 1 or each of the robots la to lc and is taught in advance by the personal computer 3 so as to be stored in the memory (refer to step B3 of Fig. 4).

Since such teaching of data is performed in advance, when execution data are to be transmitted to the individual robot 1 or robots 1a to 1c, a working point position [P_{I}] of the robot 1 or each of the robots 1a to 1c on the reference coordinate system Oₒ-xyz is converted into a working point position [R_{I}]_{J} (= [S]_{J} [P_{I}]) on a robot coordinate system O_{R}-xyz for the robot 1 or each of the robots 1a to 1c (refer to step B4 of Fig. 4).

Accordingly, where the three welding robots 1a to 1c having different installation data S on the reference coordinate system Oₒ-xyz are connected to the off-line teaching system of the present embodiment as shown in Fig. 6, if coordinate transformation matrices [S]_{J} (j = 1 to 3) for the coordinate transformation between the robot coordinate systems O_{R}-xyz of the individual robots la to lc and the reference coordinate system Oₒ-xyz are set at step B3, then execution data on a robot coordinate system of each of the robots 1a to 1c can be calculated readily in accordance with the execution data [P_{I}] common to the three robots 1a to 1c.

In this manner, according to the method of the present embodiment, since necessary data are edited and stored as block data for individual works, only if predetermined block data are selected for each work piece, necessary data are all transmitted in such a hierarchical structure as shown in Fig. 2 to the the robot 1 or robots 1a to 1c. Accordingly, transmission of execution data is facilitated remarkably, and consequently, occurrence of a transmission error is prevented with certainty and edition, and management of data can be performed readily.

Further, in the method of the embodiment, only two kinds of coordinate systems including the reference coordinate system Oₒ-xyz and the individual robot coordinate systems O_{R}-xyz are required, and consequently, a teaching operation to the three robots 1a to 1c can be performed readily in a short period of time. Further, even if the positional arrangement between one of the individual robots 1a to 1c and the work piece W thereof is varied, it is easy to cope with such variation by re-setting the corresponding coordinate transformation matrix [S]_{J}, and execution data on the coordinate systems of the individual robots 1a to 1c can be obtained readily from the common execution data [P_{I}].

Accordingly, construction of a fully automated production line such as a FMS which involves transmission of a large amount of data is permitted.

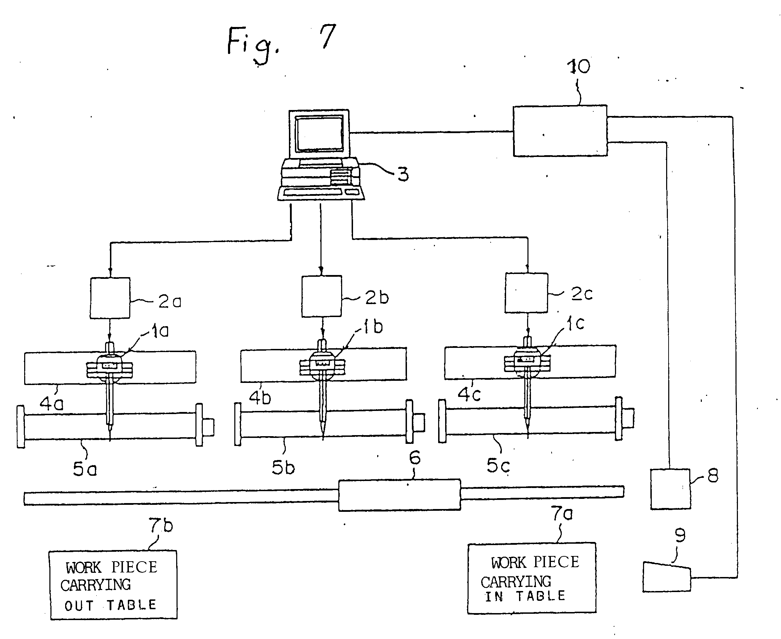

Subsequently, a particular welding FMS to which the method of the embodiment described above is applied will be described with reference to Fig. 7. The welding FMS shown includes three welding robots 1a to 1c connected to be controlled by way of control panels 2a to 2c, respectively, a personal computer (off-line teaching system) 3 which transmits execution data to the control panels 2a to 2c in such a manner as described above, three sliders 4a to 4c for adjusting the positions of the robots 1a to 1c, respectively, three positioners 5a to 5c for adjusting the positions of work pieces of the robots 1a to 1c, respectively, a work piece transporting device 6 for transporting a work piece (not shown) from a work piece carrying in table 7a to one of the positioners 5a to 5c at working positions of the robots 1a to 1c, a work piece carrying out table 7b for receiving a work piece after working from the work piece transporting device 6 and carrying away the work piece, a transporting device control panel 8 for controlling the work piece transporting device 6, a work piece setter 9 for detecting and setting a work piece carried in, and a computer 10 for the production control for controlling the entire system including the personal computer 3 and the transporting device control panel 8.

In the welding FMS having such construction as described above, an operator will place a work piece onto the work piece carrying in table 7a and enter a name of the work piece and a name of block data into the computer 10 for the production control by way of the terminal device, that is, the personal computer 3. Thus, the computer 10 for the production control detects an inoperative one of the three welding robots la to lc and instructs the work piece transporting device 6 of transportation of the work piece to the working position (positioner 5a, 5b or 5c) of the inoperative robot while it transmits, to the personal computer 3 serving as an off-line teaching system, the name of the work piece, the name of the block data and a number of the robot to which the data are to be transmitted.

Consequently, the work piece transporting device 6 carries in the work piece to the positioner of the designated robot while the personal computer 3 selects execution data corresponding to the thus received work piece name and block data name from within its memory device and transmits the selected execution data to the control panel 2a, 2b or 2c of the designated robot. In this instance, the personal computer 3 converts working point positions [P_{I}] in the execution data described on the reference coordinate system Oₒ-xyz into position coordinates [R_{I}]_{J} = [S]_{J} [P_{I}] of the robot coordinate system of the designated robot using the coordinate transformation matrix [S]_{J} for the designated robot and transmits them to the control panel 2a, 2b or 2c of the designated robot.

The designated robot 1a, 1b or 1c thus performs, after the carrying in of the work piece is completed, a welding operation to the work piece in accordance with the execution datatransmitted thereto. Then, after a welding completion signal is received from the designated robot, the computer 10 for the production control transmits a work piece carrying out instruction to the work piece transporting device 6, and consequently, the work piece is carried out to the work piece carrying out table 7b by the work piece transporting device 6 after completion of welding.

In this manner, with the welding FMS to which the method of the present invention is applied, fully automatic welding can be performed only if an operator supplies a work piece and enters a work piece name and a data block name.

It is to be noted that, while the industrial robot in the embodiment described above is described being a welding robot, the method of the present invention is not limited to this and can be applied similarly to various other types of robots.

Further, while the case wherein three robots are involved is described in the embodiment, the present invention is not limited to this. Particularly, the transmission procedure of execution data described hereinabove with reference to Figs. 1 to 3 can be applied not only to the case in which a plurality of industrial robots are involved but also in a similar manner to the other case in which only one industrial robot is involved. Also in the latter case, similar effects to those of the embodiment described above can be achieved.

## Claims

1. An off-line teaching method for at least one industrial robot (1; 1a, 1b, 1c), according to which execution data with which a predetermined processing of various work pieces (W) is to be performed by said industrial robot (1; 1a, 1b, 1c) are produced in advance by way of a separate teaching system (3), and, when the processing is to be executed by said industrial robot (1; 1a, 1b, 1c), the thus produced execution data are transmitted to said industrial robot (1; 1a, 1b, 1c) to teach the latter, said method comprising the steps of
teaching said execution data for the work pieces (W) by way of said separate teaching system (3), said execution data including processing programs (1 to m) and processing condition data (1 to n) for each step (1 to i) of said respective processing program (1 to m), and
storing said execution data thus taught,
**said method being characterized by the steps of**
editing said execution data for each of said work pieces (W) so that said individual, edited execution data comprises
block data (1 to 1) each including names of several processing programs (1 to m) which are registered in accordance with an order in which they are to be executed,
processing programs (1 to m) each including several steps (1 to i) having a name of processing condition data (1 to n) to be executed at the respective step (1 to i), and
processing condition data (1 to n) each including various set processing conditions,
storing the thus edited execution data,
setting the name of the industrial robot (1; 1a, 1b, 1c) to which said edited execution data are to be transmitted, the name of the respective work piece (W) and the name of the respective block data (1 to 1), and
transmitting said edited execution data for each of said work pieces (W) together with an identification code of said work piece (W) to said industrial robot (1; 1a, 1b, 1c), wherein,
firstly, the designated block data (1 to 1) are transmitted (step A1),
secondly, all of said processing programs (1 to m) registered in said designated block data (1 to 1) are transmitted (step A2), and,
thirdly, all of said processing condition data (1 to n) registered in said transmitted processing programs (1 to m) are transmitted (step A3).

2. An off-line teaching method according to claim 1,
wherein a reference coordinate system (O_{o-xyz}) is set in a working space in which said industrial robot (1; 1a, 1b, 1c) is installed while a position ([Pᵢ]) of a working point of said industrial robot (1; 1a, 1b, 1c) is described in said execution data in accordance with said reference coordinate system (O_{o-xyz}),
wherein a coordinate transformation matrix ([S]ⱼ) for coordinate transformation from said reference coordinate system (O_{o-xyz}) to a robot coordinate system (O_{R-xyz}) with reference to said individual industrial robot (1; 1a, 1b, 1c) is taught in advance, and
wherein, when said execution data are to be transmitted to said industrial robot (1; 1a, 1b, 1c), said position ([Pᵢ]) of said working point of said industrial robot (1; 1a, 1b, 1c) described in said execution data in accordance with said reference coordinate system (O_{o-xyz}) is converted into a position ([Rᵢ]ⱼ) of a working point of said robot coordinate system (O_{R-xyz}) using said coordinate transformation matrix ([S]ⱼ).

## Patentansprüche

1. Off-line-Lernverfahren für zumindest einen Industrieroboter (1; 1a, 1b, 1c), gemäß dem Informationsdaten, mit denen eine vorbestimmte Bearbeitung von unterschiedlichen Werkstücken (W) durch den Industrieroboter (1; 1a, 1b, 1c) ausgeführt werden soll im voraus mittels eines separaten Lernsystems (3) erzeugt werden, wobei dann, wenn die Bearbeitung durch den Industrieroboter (1; 1a, 1b, 1c) ausgeführt werden soll, die derart produzierten Ausführungsinformationen auf den Industrieroboter (1; 1a, 1b, 1c) übertragen werden, um den letzteren zu unterrichten, wobei das Verfahren die Schritte aufweist
Unterrichten über die Ausführungsinformationen für die Werkstücke (W) mittels des separaten Lernsystems (3), wobei die Ausführungsinformationen Bearbeitungsprogramme (1 bis m) und Bearbeitungsbedingungsinformationen (1 bis n) für jeden Schritt (1 bis i) des entsprechenden Bearbeitungsprogramms (1 bis m) umfassen und
Speichern der derart gelehrten Ausführungsinformationen,
wobei das Verfahren durch die folgenden Schritte
***gekennzeichnet ist,***
Editieren der Ausführungsinformationen für jedes der Werkstücke (W), so daß die individuellen, editierten Ausführungsinformationen umfassen,
Blockinformationen (1 bis 1), von denen jede Namen von verschiedenen Bearbeitungsprogrammen (1 bis m) enthalten, welche in Übereinstimmung mit einer Reihenfolge registriert sind, in der sie ausgeführt werden sollen,
Bearbeitungsprogramme (1 bis m), von denen jedes verschiedene Schritte (1 bis i) umfaßt, welche einen Namen für Bearbeitungsbedingunginformationen (1 bis n) haben, welche in dem jeweiligen Schritt (1 bis i) durchgeführt werden sollen, und
Bearbeitungsbedingungsinformationen (1 bis n), von denen jede verschiedene Einstellbearbeitungsbedingungen umfassen,
Speichern der derart editierten Ausführungsinformationen,
Bestimmen des Namens des Industrieroboters (1; 1a, 1b, 1c), an den die editierten Ausführungsinformationen übertragen werden sollen, des Namens des entsprechenden Werkstücks (W) und des Namens der entsprechenden Blockinformationen (1 bis 1) und
Übertragen der editierten Ausführungsinformationen für jedes der Werkstücke (W) zusammen mit einem Identifikationscode des Werkstücks (W) an den Industrieroboter (1; 1a, 1b, 1c), wobei
als erstes die benannten Blockinformationen (1 bis 1) übertragen werden (Schritt A1),
als zweites sämtliche der Bearbeitungsprogramme 1 bis m), die in den bezeichneten Blcckinformationen (1 bis 1 registriert sind, übertragen werden (Schritt A2) und
als drittes alle der Bearbeitungsbedingungsinformationen (1 bis n), die in den übertragenen Bearbeitungsprogrammen (1 bis m) registriert sind, übertragen werden (Schritt A3).

2. Off-line-Lernverfahren nach Anspruch 1,
***dadurch gekennzeichnet, daß***
ein Bezugskoordinatensystem (O_{o-xyz}) in einem Arbeitsraum eingestellt wird, in welchem der Industrieroboter (1; 1a, 1b, 1c) installiert ist, während eine Position ([Pᵢ]) eines Arbeitspunktes des Industrieroboters (1; 1a, 1b, 1c) in den Ausführungsinformationen in Übereinstimmung mit dem Bezugskoordinatensystem (O_{o-xyz}) beschrieben wird, wobei
eine Koordinatentransformationsmatrix ([S]ⱼ) für eine Koordinatentransformation vom Bezugskoordinatensystem (Oₒ₋ _{xyz}) auf ein Roboterkoordinatensystem (O_{R-xyz}) mit Bezug auf den einzelnen Industrieroboter (1; 1a, 1b, 1c) im voraus gelehrt wird und wobei
wenn die Ausführungsinformationen auf den Industrieroboter (1; 1a, 1b, 1c) übertragen werden sollen, die Position ([Pᵢ]) des Arbeitspunktes des einzelnen Roboters (1; 1a, 1b, 1c), welche in den Ausführungsinformationen in Übereinstimmung mit den Bezugskoordinatensystem (O_{o-xyz}) beschrieben sind in einer Position ([Rᵢ]ⱼ) eines Arbeitspunktes des Roboterkoordinatensystems (O_{R-xyz}) bei Verwendung der Koordinatentransformationsmaterix ([S]ⱼ) konvertiert wird.

## Revendications

1. Procédé d'apprentissage autonome pour au moins un robot industriel (1; 1a, 1b, 1c), selon lequel des données d'exécution, à l'aide desquelles un traitement prédéterminé de différentes pièces de travail (W) doit être effectué par ledit robot industriel (1; 1a, 1b, 1c), sont produites à l'avance au moyen d'un système d'apprentissage (3) séparé et, lorsque le traitement doit être exécuté par ledit robot industriel (1; 1a, 1b, 1c), les données d'exécution ainsi produites sont transmises audit robot industriel (1; 1a, 1b, 1c) pour lui enseigner ces dernières, ledit procédé comprend les étapes d'
apprentissage desdites données d'exécution pour les pièces de travail (W) au moyen dudit système d'apprentissage (3) séparé, lesdites données d'exécution comprenant des programmes de traitement (1 à m) et des données d'état de traitement (1 à n) pour chaque étape (1 à i) dudit programme de traitement (1 à m) respectif, et
stockage desdites données d'exécution ainsi enseignées,
ledit procédé étant caractérisé par les étapes de
mise en forme desdites données d'exécution pour chacune desdites pièces de travail (W), de manière que lesdites données d'exécution mises en forme individuelles comprennent :
des données en blocs (1 à l) comprenant chacune des noms d'une pluralité de programmes de traitement (1 à m) qui sont enregistrées d'après un ordre selon lequel ils doivent être exécutés,
des programmes de traitement (1 à m) comprenant chacun plusieurs étapes (1 à i) ayant un nom de données d'état de traitement (1 à n), à exécuter à l'étape (1 à i) respective, et
des données d'état de traitement (1 à n) comprenant chacune différents états de traitement établis,
stockage des données d'exécution ainsi mises en forme,
établissement du nom du robot industriel (1; 1a, 1b, 1c) auquel doivent être transmises lesdites données d'exécution mises en forme, le nom de la pièce de travail (W) et le nom des données en blocs (1 à l) respectives, et
transmission desdites données d'exécution mises en forme pour chacune desdites pièces de travail (W) conjointement avec un code d'identification de ladite pièce de travail (W), audit robot industriel (1; 1a, 1b, 1c), dans lequel
premièrement, la transmission des données en blocs (1 à l) désignées est effectuée (étape A1),
deuxièmement, la totalité desdits programmes de traitement (1 à m) enregistrés dans lesdites données en blocs (1 à l) désignées sont transmis (étape A2), et,
troisièmement, la totalité des données d'état de traitement (1 à n) enregistrées dans lesdits programmes de traitement (1 à m) transmis sont transmises (étape A3).

2. Procédé d'apprentissage autonome selon la revendication 1,
dans lequel un système de coordonnées de référence (O_{o-xyz}) est établi dans un espace de travail dans lequel ledit robot industriel (1; 1a, 1b, 1c) est installé, tandis qu'une position ([Pᵢ]) d'un point de travail dudit robot industriel (1; 1a, 1b, 1c) est décrite dans lesdites données d'exécution selon ledit système de coordonnées de référence (O_{o-xyz}),
dans lequel une matrice de transformation de coordonnées ([S]ⱼ), conçue pour effectuer une transformation de coordonnées depuis ledit système de coordonnées de référence (O_{o-xyz}) à un système de coordonnées de robot (O_{R-xyz}) en se référant audit robot industriel (1; 1a, 1b, 1c) individuel, est apprise à l'avance, et
dans lequel, lorsque lesdites données d'exécution doivent être transmises audit robot industriel (1; 1a, 1b, 1c), ladite position ([Pᵢ]) dudit point de travail dudit robot industriel (1; 1a; 1b, 1c) décrit dans lesdites données d'exécution, selon ledit système de coordonnées de référence (O_{o-xyz}), est convertie en une position ([Rᵢ]ⱼ) d'un point de travail dudit système de coordonnées de robot (O_{R-xyz}) par utilisation de ladite matrice de transformation de coordonnées ([S]ⱼ).
